# EUROPÄISCHE PATENTSCHRIFT

(11) **EP 2 353 799 B1**
(45) Veröffentlichungstag und Bekanntmachung des Hinweises auf die Patenterteilung: **27.06.2018**
(21) Anmeldenummer: 11000438.9
(22) Anmeldetag: 20.01.2011
(51) Int. Cl.: B25J 9/16

(54) **Verfahren und Vorrichtung zur Überwachung eines Manipulatorraumes**
Method and device for monitoring a manipulator area
Procédé et dispositif de surveillance d'une chambre de manipulateur

(30) Priorität: 05.02.2010 DE 102010007027; 05.02.2010 DE 102010007025
(43) Veröffentlichungstag der Anmeldung: 10.08.2011
(73) Patentinhaber: KUKA Roboter GmbH, 86165 Augsburg (DE)
(72) Erfinder: Miller, Klaus, 86405 Meitingen (DE)
(74) Vertreter: Schlotter, Alexander Carolus Paul

(56) Entgegenhaltungen:
- WO-A1-2009/049995
- DE-A1-102004 041 821
- DE-A1-102005 003 827
- DE-B4-102007 007 576
- DE-C1- 4 408 982
- US-A1- 2004 096 083

## Beschreibung

Die vorliegende Erfindung betrifft ein Verfahren und eine Vorrichtung zur Überwachung auf Objekte innerhalb eines Manipulatorraumes, dessen geometrische Grenze teilautomatisiert vorgegeben wird.

Um Beschädigungen von bei der Bahnplanung nicht vorgesehenen Objekten und insbesondere Verletzungen von Menschen durch Manipulatoren wie insbesondere Industrieroboter zu verhindern, ist es bislang üblich, den Arbeitsraum des Manipulators physisch abzusperren, beispielsweise durch Schutzzäune, Lichtschranken oder dergleichen, die den Zutritt zu einer Automatisierungszelle verhindern. Eine solche Lösung ist jedoch aufwändig und unflexibel und damit insbesondere für mobile oder interagierende Manipulatoren ungünstig.

Daher schlägt die DE 10 2007 007 576 B4 vor, dreidimensionale Bilder des Arbeitsraumes in einem ungestörten Soll-Zustand und einem aktuellen, zu überwachenden Ist-Zustand zu vergleichen. Weichen beide Bilder voneinander ab, kann auf ein unzulässiges Objekt geschlossen werden, welches eine Differenz zwischen beiden Bildern bewirkt. Die Grenzen des dabei abgebildeten Arbeitsraumes werden manuell durch den Nutzer über ein Mensch-Maschine-Interface definiert.

Dieses System ist aufgrund der Bildverarbeitung aufwändig. Zudem kann eine Änderung eines Objektes innerhalb des Arbeitsraumes, beispielsweise der Ersatz einer Zuführeinrichtung durch eine Zuführeinrichtung mit anderen optischen Konturen, unnötig als Arbeitsraumverletzung klassifiziert werden.

Alternativ ist aus der DE 10 2004 041 821 A1 ein Verfahren nach dem Oberbegriff des Anspruchs 1 bekannt. Danach überwachen Laserscanner einen Arbeitsraum auf Objekte. Die Grenze des überwachten Arbeitsraumes wird ebenfalls manuell definiert. Auf im Arbeitsraum zulässige Objekte wie Zuführeinrichtungen und dergleichen und insbesondere den Manipulator selber spricht die Sensorelektronik durch Ausblenden entsprechender Detektionszonen nicht an.

Nachteilig erfordern beide Verfahren zur Vorgabe der Grenzen des überwachten Raumes eine manuelle Definition durch den Anwender, die in der Regel mittels einer graphischen Benutzeroberfläche erfolgt, auf der der Anwender geometrische Primitive wie Punkte und Linien positionieren muss. Dies ist insbesondere beim Teachen mehrerer unterschiedlicher neuer Arbeitsräume, wie dies etwa bei mobilen Manipulatoren oder auf Messeständen mit sich kurzfristig ändernder Umgebung der Fall ist, zeitaufwändig und fehleranfällig.

Die WO 2009/049995 A1 betrifft ein Laborsystem mit einer Transporteinrichtung für Proben und einem Überwachungssystem zur Einhaltung eines Sicherheitsabstandes. Ziel ist es, ein paralleles Arbeiten von Mensch und Maschine zu ermöglichen, ohne dass aufwändige Sicherheitsabsperrungen erforderlich sind. Dazu wird vorgeschlagen, an einem Roboter, welcher Proben transportiert, ein Überwachungssystem anzuordnen, durch welches eine Einhaltung eines Sicherheitsabstandes überprüft wird.

Die DE 10 2007 007 576 B4 betrifft ein Verfahren und eine Vorrichtung zum Sichern eines Arbeitsraumes. Ziel ist es, ein alternatives Verfahren zum Bedienerschutz bei einer Mensch-Maschine-Interaktion bereitzustellen. Dazu wird vorgeschlagen, ein dreidimensionales Bild vom Arbeitsraum der Maschine zu erstellen, wobei es vorgesehen ist, dass sich eine Person innerhalb des Arbeitsraums aufhält.

Die DE 10 2005 003 827 A1 betrifft eine Vorrichtung und ein Verfahren zur Interaktion zwischen einem Menschen und einer Robotereinheit an einem Roboterarbeitsplatz. Ziel ist es, eine gefahrlose Kooperation eines Menschen mit einem Roboter zu ermöglichen. Die Sicherheitsfunktion soll einen skalierbaren Abstand zwischen Mensch und Roboter ermöglichen.

Die DE 44 08 982 C1 betrifft ein autonomes Navigationssystem für einen mobilen Roboter oder Manipulator. Ziel ist es, ein Navigationssystem bereitzustellen, mit denen ein Roboter trotz geringer und sogar unvollständiger Informationen zu einem vorgegebenen Zielpunkt durch einen Arbeitsraum geführt wird, ohne mit Hindernissen zu kollidieren. Ein weiteres Ziel ist es, bei der Fahrt des Roboters Grenzzyklen sowie oszillatorisches und unruhiges Bewegungsverhalten zu vermeiden.

Die EP 10 2004 41 821 A1 betrifft eine Vorrichtung und ein Verfahren zur Sicherung eines maschinegesteuerten Handhabungsgerätes. Ziel ist es, zur Überwachung eines Arbeitsraumes eines Roboters die notwendigen Schutzzäune zu vermeiden und dennoch maximale Sicherheit für das Bedienpersonal zu bewirken, wobei eine Vereinfachung der Überwachungsvorrichtung sowie eine Eignung dieser für mobile Robotersysteme möglich sein soll.

Aufgabe der vorliegenden Erfindung ist es, die Überwachung eines Manipulatorraumes zu verbessern.

Diese Aufgabe wird durch ein Verfahren mit den Merkmalen des Anspruchs 1 gelöst. Anspruch 8 stellt eine Vorrichtung, Anspruch 10 ein Computerprogrammprodukt, insbesondere ein Speichermedium oder einen Datenträger, zur Durchführung eines Verfahrens nach Anspruch 1 unter Schutz. Die Unteransprüche betreffen vorteilhafte Weiterbildungen.

Eine Umgebungserfassungseinrichtung überwacht, ob innerhalb eines Manipulatorraumes ein oder mehrere nicht vorgesehene bzw. zulässige Objekte vorhanden sind. Ist dies der Fall, kann eine entsprechende, gegebenenfalls abgestufte, Reaktion erfolgen. So kann zum Beispiel ein Arbeitsraum des Manipulators für alle oder ausgewählte Teile des Manipulators, etwa sein Werkzeug und/oder seinen Arm, zulässig sein. Wird in diesem Arbeitsraum ein nicht vorgesehenes Objekt erfasst, kann der Manipulator beispielsweise sicher stillgesetzt werden, um eine Kollision zu verhindern. Beispielsweise in Eindringrichtung vor dem Arbeitsraum kann ein Warnraum definiert sein. Wird in diesem Warnraum ein nicht vorgesehenes Objekt erfasst, kann zum Beispiel eine Warnung ausgegeben und/oder die Geschwindigkeit des Manipulators reduziert werden. Gleichermaßen kann auch ein, etwa für Bedienpersonen zulässiger, Schutzraum überwacht werden, wobei dann insbesondere Teile des Manipulators als nicht vorgesehene Objekte erfasst werden und eine entsprechende Reaktion, etwa Warnung, Geschwindigkeitsreduktion oder Stillsetzung auslösen. Im überwachten Raum zulässige Objekte, also insbesondere solche, deren Vorhandensein bei der Planung eines Manipulatorarbeitsprogrammes berücksichtigt wurden, etwa Teile des Manipulators selber, Zu- und Abführeinrichtungen, Werkzeugschränke und dergleichen, können vorzugsweise innerhalb des Arbeitsraumes vorgesehen werden, so dass ihre Erfassung keine der oben erläuterten Reaktionen auslöst.

Erfindungsgemäß wird nun eine geometrische Grenze des zu überwachenden bzw. überwachten Raumes nicht mehr rein manuell, sondern teil- oder vollständig automatisiert auf Basis einer vorab erfassten Umgebung und/oder einer Kinematik des Manipulators vorgegeben.

Dabei kann die Grenze teil- oder vollständig automatisiert durch, insbesondere längs eine(r), vorzugsweise ausgedehnte(n), zwei- oder dreidimensionalen erfassten Umgebungskontur definiert werden. Auf diese Weise muss der Anwender die Grenze nicht manuell entsprechend der Umgebungskontur durch Eingabe von Geometrieprimitiven oder dergleichen definieren und die Umgebungskontur durch diese mühsam und fehleranfällig approximieren. Stattdessen wird die Grenze automatisch beispielsweise längs einer erfassten Umgebungskontur vorgegeben.

In einem ersten Schritt kann dabei die Grenze in Abhängigkeit von der Umgebungserfassungseinrichtung, beispielsweise ihrer Reichweite und dergleichen, vorgegeben werden. Dann kann in einem zweiten Schritt in Bereichen, in denen innerhalb der im ersten Schritt festgelegten Grenze ausgedehnte Umgebungskonturen erfasst worden sind, die Grenze auf Basis dieser Umgebungskonturen definiert werden.

Die Grenze kann automatisch und/oder durch den Anwender noch angepasst werden. So kann beispielsweise eine solcherart vorgegebene Grenze automatisch oder teilautomatisiert auf Basis entsprechender Benutzereingaben insgesamt oder streckenweise zum Manipulator hin verkürzt werden, um etwa Toleranzen vorzusehen oder einen Bremsweg des Manipulators zu berücksichtigen. Gleichermaßen kann die vorgegebene Grenze auch insgesamt oder streckenweise verlängert werden, beispielsweise als Schutzraumgrenze oder um ein Eindringen eines Arbeitswerkzeugs in eine zu bearbeitende Umgebung zu ermöglichen.

Zusätzlich oder alternativ kann eine vorab erfasste Umgebung auch zur hybriden, i.e. kombiniert manuell und teilautomatisierten Vorgabe der Grenze, insbesondere in einer graphischen Benutzeroberfläche, zur Verfügung gestellt werden. Insbesondere nicht ausgedehnte Umgebungskonturen, unter denen vorliegend insbesondere erfasste Objekte bzw. Konturen mit geringerer Ausdehnung in einer oder mehreren Raumrichtungen wie Ecken, Kanten, Stützen, Träger und dergleichen verstanden werden, können als Ankerelemente dienen, die vollständig automatisch oder durch den Anwender teilautomatisiert mit, beispielsweise benachbarten, Ankerelementen oder längs ausgedehnter Umgebungskonturen definierten Grenzbereichen verbunden werden können, beispielsweise über Geometrieprimitive wie Linien, insbesondere Geraden oder Kurven, Flächen, insbesondere Ebenen oder Sphären, Körper, insbesondere Quader oder Kugeln, und dergleichen. Gleichermaßen können insbesondere solche erfassten Objekte bzw. Konturen dazu dienen, nicht überwachte Teilräume, beispielsweise Zugangskorridore, Zu- und Abführpassagen und dergleichen zu definieren.

In einer bevorzugten Ausführung wird die Umgebung des Manipulators vorab durch die Umgebungserfassungseinrichtung erfasst, die nachfolgend auch zur Überwachung des Raumes verwendet wird. Dies spart nicht nur apparativen Aufwand, sondern reduziert auch Transferfehler zwischen der Erfassung der Umgebung zur Vorgabe der Grenze einerseits und der Überwachung des so begrenzten Raumes andererseits. Die Umgebungserfassungseinrichtung kann beispielsweise einen oder mehrere, vorzugsweise berührungslose, Abstandssensoren aufweisen, etwa Laserscanner zur eindimensionalen Abstandserfassung, die durch entsprechendes Verschwenken und/oder Verfahren auch zwei- oder dreidimensionale Abstände erfassen können. Gleichermaßen sind jedoch auch Ultraschall-, Infrarot-, Mikrowellen-, Radar-, bildgebende und -auswertende oder andere Sensoren einsetzbar.

Ein überwachter Raum weist eine Grenze auf. Dabei kann der Raum aus Teilräumen, etwa von verschiedenen Sensoren überwachten Räumen und/oder nicht überwachten Teilräumen wie Zugangskorridoren und dergleichen zusammengesetzt sein. Entsprechend kann seine Grenze auch mehrere Abschnitte oder Bereiche aufweisen, welche nicht notwendigerweise alle zusammenhängen. Insbesondere kann eine manipulatorferne, äußere Grenze des überwachten Raumes eine Grenze im Sinne der vorliegenden Erfindung darstellen.

Weitere Vorteile und Merkmale ergeben sich aus den Unteransprüchen und den Ausführungsbeispielen. Hierzu zeigt, teilweise schematisiert:
- Fig. 1:: in der Draufsicht von oben einen mobilen Roboter mit einer Raumüberwachungsvorrichtung nach einer Ausführung der vorliegenden Erfindung; und
- Fig. 2, 3:: eine erfindungsgemäße Vorgabe der Arbeitsraumgrenze für den mobilen Roboter der Fig. 1.

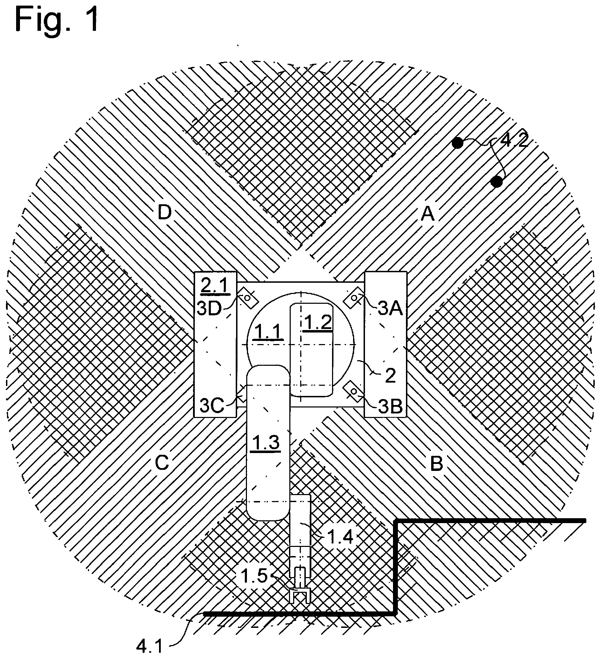

Fig. 1 zeigt in der Draufsicht von oben einen mobilen sechsachsigen Knickarmroboter 1. Dessen Grundgestell 1.1 ist auf einer mobilen Plattform 2 angeordnet, die über Raupen 2.1 im Raum verfahrbar ist. Um eine vertikale Achse drehbar am Grundgestell 1.1 ist ein Karussell 1.2 mit einer um eine horizontale Achse drehbaren Schwinge 1.3 angelenkt, an dieser ein um eine hierzu parallele Drehachse drehbarer Arm 1.4, der eine Zentralhand mit drei sich in einem Punkt schneidenden Drehachsen trägt, an deren Flansch ein Werkzeug 1.5 befestigt ist.

Auf der mobilen Plattform 2 sind vier Laserscanner 3A bis 3D angeordnet, die beispielsweise durch Verschwenken oder eine zweidimensionale Erfassung jeweils einen in Fig. 1 schraffiert eingezeichneten Erfassungsbereich A, B, C bzw. D abtasten und darin Objekte erfassen können. In einer nicht dargestellten Abwandlung kann alternativ beispielsweise ein Sensor mit dem Arm 1.4 mitschwenken und so stets den Bereich überprüfen, in dem der Roboter agiert. Gleichermaßen können Sensoren auch inertial bzw. ortsfest angeordnet sein und beispielsweise über Funk mit einem mobilen Roboter kommunizieren.

In der Umgebung sind exemplarisch eine ausgedehnte Umgebungskontur 4.1 sowie zwei Pfeiler 4.2 eingezeichnet, auf die nachfolgend näher eingegangen wird.

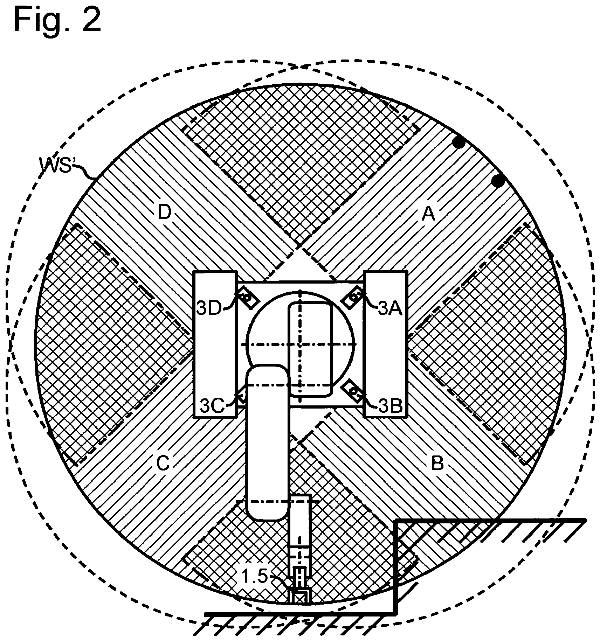

Bei in einer horizontalen Ebene maximal ausgestrecktem Roboter fährt das Werkzeug 1.5 bei Drehung um die vertikale Achse des Karussells 1.2 den in Fig. 2 durchgezogen eingezeichneten Kreis in dieser Ebene ab.

Man erkennt in Fig. 1, dass die Grenze eines von der Umgebungserfassungseinrichtung 3 mit den vier Laserscannern 3A bis 3D erfassten Raumes A ∩ B ∩ C ∩ D einerseits nicht dem maximalen Arbeitsraum des Roboters 1 entspricht, so dass auch bei Objekten, die sich außerhalb der maximalen Reichweite des Roboters (durchgezogene Linie in Fig. 2), aber innerhalb des Erfassungsbereichs A ∩ B ∩ C ∩ D (strichliert in Fig. 2) befinden, eine Überwachung ansprechen würde. Andererseits würde auch die Umgebungskontur 4.1, die in den Arbeitsbereich des Roboters hineinragt und bei dessen Bahnplanung berücksichtigt wird, als nicht vorgesehenes Objekt klassifiziert.

Erfindungsgemäß wird daher die äußere Grenze WS' des zu überwachenden Arbeitsraumes in einem ersten, in Fig. 2 angedeuteten Schritt auf Basis der Kinematik des Roboters 1 automatisch derart vorgegeben, dass nur sein maximal erreichbarer Arbeitsraum überwacht wird, der im Ausführungsbeispiel durch Kreisscheiben definiert ist, die sein Arm mit Werkzeug bei in der Kreisscheibenebene maximal ausgestrecktem Roboter beim Drehen um die vertikale Achse des Karussells durchfahren. Objekte, die gleichwohl von den Laserscannern 3A bis 3D in den Bereichen A, B, C und D erfasst werden, werden ignoriert oder die Reichweite der Laserscanner entsprechend verändert.

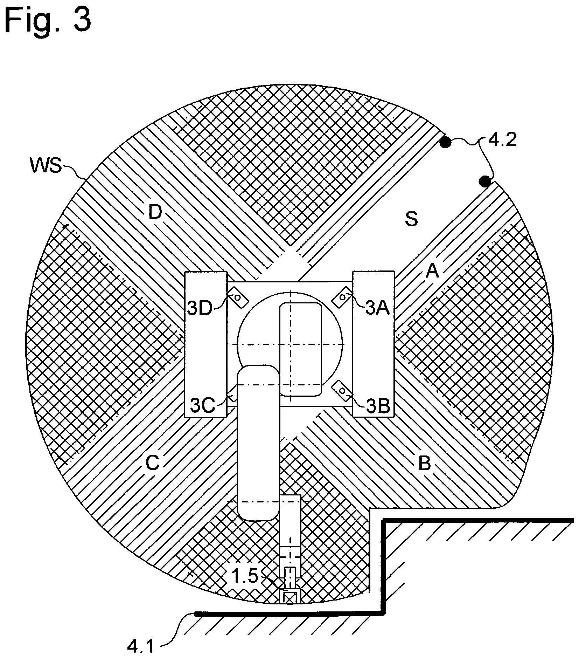

In einem zweiten, in Fig. 3 angedeuteten Schritt wird die Grenze WS des zu überwachenden Arbeitsraumes zusätzlich automatisiert durch erfasste ausgedehnte Umgebungskonturen definiert, soweit diese innerhalb der entsprechend der Kinematik des Roboters vorgegebenen Grenze WS' (vgl. Fig. 2) liegen. Hierzu erfassen die Laserscanner 3A bis 3D in einer neuen Position der Plattform 2 des mobilen Roboters 1 vorab die Umgebung, so dass die Position solcher Umgebungskonturen relativ zu dem Roboter bekannt ist, im Ausführungsbeispiel die in die Grenze WS' hineinragende Ecke 4.1. Dann wird die Grenze WS' in diesem Bereich durch die erfasste Kontur definiert, i.e. folgt dieser.

In einem weiteren Schritt wird die Grenze WS in diesem Bereich automatisch um einen vom Bediener vorgegebenen oder von dem Roboter oder seinem Arbeitsprogramm abhängigen Faktor verkürzt, so dass sie nicht mehr auf der Kontur 4.1 verläuft, sondern parallel zu dieser näher zum Roboter 1 hin. Dies verhindert, dass bei kleinen Bewegungen der Plattform des mobilen Roboters während seines Betriebs die Kontur 4.1 unerwünschterweise als nicht vorgesehenes Objekt im Arbeitsbereich erfasst wird.

In einem weiteren Schritt will der Bediener einen nicht auf Objekte überwachten Zugangskorridor zum Standplatz des mobilen Roboters definieren, der beispielsweise auf dem Hallenboden markiert und durch die beiden Pfeiler 4.2 begrenzt ist.

Hierzu wird ihm die vorab erfasste Umgebung einschließlich der durch den Scanner 3A erfassten Pfeiler 4.2 in einer graphischen Benutzeroberfläche zur Verfügung gestellt, die beispielsweise im Wesentlichen der Fig. 3 entsprechend kann. Dann kann der Anwender beispielsweise durch Anwahl eines entsprechenden Befehls teilautomatisiert einen Quader als nicht auf Objekte überwachten Schutzraum S derart vorgeben, dass dieser in seinen roboterfernen Kanten mit den Pfeilern 4.2 abschließt und bis zur mobilen Plattform 2 reicht. Hierzu reicht es beispielsweise, auf der graphischen Benutzeroberfläche die beiden dargestellten Pfeiler 4.2 sowie ein Geometrieprimitiv "Quader" zu markieren und beispielsweise dessen roboterferne Außenseite durch gemeinsames Markieren den Pfeiler 4.2 zuzuordnen, so dass die Grenze WS in diesem Bereich durch den auf Basis der erfassten Pfeiler 4.2 vorgegebenen, nicht überwachten Schutzraum S definiert ist.

Durch die automatisierte Vorgabe der Grenze WS auf Basis der Kinematik des Roboters, insbesondere seiner jeweiligen maximalen Erstreckung, und der durch die Scanner 3A bis 3D erfassten Umgebung 4.1, 4.2, wobei diese teilautomatisiert durch Vorgabe des Geometrieprimitivs S und des Verkürzungsfaktors der Grenze im Bereich der Kontur 4.1 noch manuell angepasst werden kann, ist es möglich, auch für den mobilen Roboter mit wechselnden Standorten und damit einhergehender wechselnder Umgebung rasch und fehlersicher jeweils geeignete Arbeitsraumgrenzen vorzugeben.

Ein weiterer Vorteil zeigt sich bei einer toleranzbedingten Fehlpositionierung der bewegten Basis eines mobilen Manipulators gegenüber einer geteachten Ausgangs-Basisposition. Während hier die Überwachung des für die Ausgangs-Basisposition vorgegebenen Raumes zu einem Ansprechen der Überwachung führen kann, wenn der Manipulator etwa aufgrund von Navigationsfehleren zu nahe an einer Umgebungskontur positioniert ist, führt die wenigstens teilautomatisierte Vorgabe der Grenze auf Basis der in der aktuellen Ist-Basisposition erfassten Umgebung zu einem korrekt an die geänderte Position angepassten überwachten Raum.

Im Betrieb überprüfen die Laserscanner 3A bis 3D ständig den durch seine Grenze WS definierten Arbeitsraum. In diesem können zulässige Objekte vorgesehen sein, beispielsweise die Teile 1.2 bis 1.5 des Roboters 1, deren aktuelle Position aus seinen Gelenkkoordinaten und deren Kontur beispielsweise aus CAD-Daten bekannt ist. Wird ein solches vorgesehenes, zulässiges Objekt, zum Beispiel ein Teil 1.2 bis 1.5 an der durch die aktuellen Gelenkkoordinaten des Roboters definierten Position, von den Laserscannern erfasst, wird dies ignoriert, ohne dass die Überwachung anspricht.

Erfasst hingegen einer der Laserscanner 3A bis 3D ein nicht vorgesehenes, unzulässiges Objekt innerhalb der Grenze WS, beispielsweise eine Bedienperson, die unbefugt den Arbeitsraum des Roboters betreten bzw. den Schutzbereich S verlassen hat, wird der Roboter 1 sicher stillgesetzt. Gleichermaßen kann, beispielsweise in Abhängigkeit vom Abstand des erfassten unzulässigen Objektes zu dem Arm des Roboters eine abgestufte Reaktion erfolgen, indem bei ausreichend großem Abstand eine Warnung ausgegeben und die Geschwindigkeit des Roboters reduziert wird, bei zu geringem Abstand hingegen der Roboter sicher stillgesetzt wird.

### Bezugszeichenliste

- (1: Roboter)
- 1.1: Grundgestell
- 1.2: Karussell
- 1.3: Schwinge
- 1.4: Arm
- 1.5: Zentralhand
- 2: mobile Plattform
- 2.1: Raupenkette
- 3A-3D: Laserscanner (Umgebungserfassungseinrichtung)
- 4.1: ausgedehnte Umgebungskontur
- 4.2: Pfeiler

- A - D: Erfassungsbereich

## Patentansprüche

1. Verfahren zur Überwachung eines Manipulatorraumes, insbesondere für einen Roboter (1), mit den Schritten:
Vorgabe einer geometrischen Grenze (WS) des zu überwachenden Raumes; und Überwachen auf nicht vorgesehene Objekte innerhalb der vorgegebenen Grenze (WS) durch eine Umgebungserfassungseinrichtung (3A - 3D);
**dadurch gekennzeichnet, dass**
die Grenze (WS) wenigstens teilautomatisiert auf Basis einer erfassten Umgebung (4.1, 4.2) und einer Kinematik des Manipulators vorgegeben wird, wobei die Grenze auf Basis einer erfassten Umgebungskontur definiert wird.

2. Verfahren nach Anspruch 1, **dadurch gekennzeichnet, dass** die Umgebung (4.1, 4.2) des Manipulators vorab durch die Umgebungserfassungseinrichtung (3A - 3D) erfasst wird.

3. Verfahren nach einem der vorhergehenden Ansprüche, **dadurch gekennzeichnet, dass** der zu überwachende Raum einen Arbeitsraum, der für Teile des Manipulators zulässig ist, einen Schutzraum (S), der für Teile des Manipulators nicht zulässig ist, und/oder wenigstens einen Warnraum umfasst, wobei eine, vorzugsweise abgestufte Reaktion erfolgt, wenn die Umgebungserfassungseinrichtung ein nicht vorgesehenes Objekt in einem Arbeits- oder Warnraum erfasst.

4. Verfahren nach einem der vorhergehenden Ansprüche, **dadurch gekennzeichnet, dass** die Grenze (WS) wenigstens teilautomatisiert durch eine, vorzugsweise ausgedehnte, Umgebungskontur (4.1) definiert wird.

5. Verfahren nach Anspruch 4, **dadurch gekennzeichnet, dass** eine vorab erfasste Umgebung (4.2) zur teilmanuellen Vorgabe der Grenze (WS), insbesondere in einer graphischen Benutzeroberfläche, zur Verfügung gestellt wird.

6. Verfahren nach einem der vorhergehenden Ansprüche, **dadurch gekennzeichnet, dass** eine vorgegebene Grenze (WS) wenigstens teilautomatisiert zum Manipulator hin verkürzt oder vom Manipulator weg verlängert wird.

7. Verfahren nach einem der vorhergehenden Ansprüche, **dadurch gekennzeichnet, dass** eine Vorgabe von nicht überwachten Teilräumen (S) vorgesehen ist.

8. Vorrichtung zur Überwachung eines Manipulatorraumes, insbesondere für einen Roboter, mit:
einer Umgebungserfassungseinrichtung (3A - 3D) zum Überwachen auf nicht vorgesehene Objekte innerhalb einer vorgegebenen geometrischen Grenze (WS) des zu überwachenden Raumes;
**gekennzeichnet durch**
einer Vorgabeeinrichtung zum wenigstens teilautomatisierten Vorgeben der Grenze (WS) auf Basis einer erfassten Umgebung (4.1, 4.2) und einer Kinematik des Manipulators, wobei die Grenze auf Basis einer erfassten Umgebungskontur definiert wird, die zur Durchführung eines Verfahrens nach einem der vorhergehenden Ansprüche eingerichtet ist.

9. Vorrichtung nach Anspruch 8, **dadurch gekennzeichnet, dass** die Umgebungserfassungseinrichtung wenigstens einen, vorzugsweise berührungslosen, Abstandssensor (3A - 3D) zur ein-, zwei- oder dreidimensionalen Abstandserfassung aufweist.

10. Computerprogrammprodukt mit Programmcode, der auf einem maschinenlesbaren Träger gespeichert ist und ein Verfahren nach einem der vorhergehenden Ansprüche 1 bis 7 ausführt, wenn er in einer Vorrichtung nach Anspruch 8 oder 9 ausgeführt wird.

## Claims

1. A method of monitoring a manipulator space, in particular for a robot (1), comprising the steps of:
specifying a geometrical boundary (WS) of the space to be monitored; and
monitoring, by means of an environment detection device (3A - 3D), as regards to unexpected objects within the specified boundary (WS);
**characterized in that**
the boundary (WS) is specified in an at least partially automated manner on the basis of a detected environment (4.1, 4.2) and a kinematics of the manipulator, wherein the boundary is defined on the basis of a detected environment contour.

2. The method according to claim 1, **characterized in that** the environment (4.1, 4.2) of the manipulator is detected in advance by means of the environment detection device (3A - 3D).

3. The method according to any one of the preceding claims, **characterized in that** the space to be monitored comprises a work zone, to which portions of the manipulator are admitted, a protected zone (S), to which portions of the manipulator are not admitted, and/or at least one alert zone, wherein a, preferably graded, reaction ensues when the environment detection device detects an unexpected object in a work zone or an alert zone.

4. The method according to any one of the preceding claims, **characterized in that** the boundary (WS) is defined by an environment contour (4.1), in particular an expanded environment contour (4.1), in an at least partially automated manner.

5. The method according to claim 4, **characterized in that** an environment (4.2) detected in advance is made available for the purpose of partially manually specifying the boundary (WS), in particular via a graphical user interface.

6. The method according to any one of the preceding claims, **characterized in that** a specified boundary (WS) is shortened towards the manipulator or made longer away from the manipulator in an at least partially automated manner.

7. The method according to any one of the preceding claims, **characterized in that** provision is made for specifying non-monitored partial zones (S).

8. Apparatus for monitoring a manipulator space, in particular for a robot, comprising:
an environment detection device (3A - 3D) for monitoring as regards to unexpected objects within a specified geometrical boundary (WS) of the space to be monitored;
**characterized by**
a specifying device for specifying the boundary (WS) in an at least partially automated manner on the basis of a detected environment (4.1, 4.2) and a kinematics of the manipulator, wherein the boundary is defined on the basis of a detected environment contour,
which is arranged for carrying out a method according to any one of the preceding claims.

9. Apparatus according to claim 8, **characterized in that** the environment detection device comprises at least one distance sensor (3A - 3D), preferably a non-contact distance sensor (3A - 3D), for one-dimensional, two-dimensional or 3-dimensional distance detection.

10. A computer program product with program code which is stored on a machine-readable medium and which carries out a method according to any one of the preceding claims 1 to 7 when it is run on an apparatus according to claim 8 or 9.

## Revendications

1. Procédé de surveillance d'une chambre de manipulateur, en particulier pour un robot (1), avec les étapes de :
prédéfinition d'une limite géométrique (WS) de la chambre à surveiller ; et
surveillance quant à des objets non prévus à l'intérieur de la limite prédéfinie (WS) par un dispositif de détection d'environnement (3A- 3D) ;
**caractérisé en ce que**
la limite (WS) est prédéfinie au moins de manière partiellement automatisée sur la base d'un environnement détecté (4.1, 4.2) et d'une cinématique du manipulateur, dans lequel la limite est définie sur la base d'un contour d'environnement détecté.

2. Procédé selon la revendication 1, **caractérisé en ce que** l'environnement (4.1, 4.2) du manipulateur est détecté au préalable par le dispositif de détection d'environnement (3A - 3D).

3. Procédé selon l'une quelconque des revendications précédentes, **caractérisé en ce que** la chambre à surveiller comprend un espace de travail, qui est autorisé pour des parties du manipulateur, un espace de protection (S), qui n'est pas autorisé pour des parties du manipulateur, et/ou au moins un espace d'avertissement, dans lequel une réaction de préférence graduée a lieu, lorsque le dispositif de détection d'environnement détecte un objet non prévu dans un espace de travail ou d'avertissement.

4. Procédé selon l'une quelconque des revendications précédentes, **caractérisé en ce que** la limite (WS) est définie au moins de manière partiellement automatisée par un contour d'environnement (4.1) de préférence étendu.

5. Procédé selon la revendication 4, **caractérisé en ce qu'**un environnement (4.2) détecté au préalable est mis à disposition pour la prédéfinition partiellement manuelle de la limite (WS), en particulier dans une interface utilisateur graphique.

6. Procédé selon l'une quelconque des revendications précédentes, **caractérisé en ce qu'**une limite prédéfinie (WS) est raccourcie au moins de manière partiellement automatisée vers le manipulateur ou allongée en s'éloignant du manipulateur.

7. Procédé selon l'une quelconque des revendications précédentes, **caractérisé en ce qu'**une prédéfinition d'espaces partiels non surveillés (S) est prévue.

8. Dispositif de surveillance d'une chambre de manipulateur, en particulier pour un robot, avec :
un dispositif de détection d'environnement (3A - 3D) pour la surveillance d'objets non prévus à l'intérieur d'une limite géométrique prédéfinie (WS) de la chambre à surveiller ;
**caractérisé par**
un dispositif de prédéfinition pour la prédéfinition au moins partiellement automatisée de la limite (WS) sur la base d'un environnement détecté (4.1, 4.2) et d'une cinématique du manipulateur, dans lequel la limite est définie sur la base d'un contour d'environnement détecté, qui est aménagé pour la réalisation d'un procédé selon l'une quelconque des revendications précédentes.

9. Dispositif selon la revendication 8, **caractérisé en ce que** le dispositif de détection d'environnement présente au moins un capteur de distance (3A - 3D) de préférence sans contact pour la détection de distance unidimensionnelle, bidimensionnelle ou tridimensionnelle.

10. Produit de programme informatique avec code de programme, qui est enregistré sur un support lisible par machine et effectue un procédé selon l'une quelconque des revendications 1 à 7, lorsqu'il est exécuté dans un dispositif selon la revendication 8 ou 9.
